Europäisches Patentamt

European Patent Office

Office européen des brevets

(19)

(11) Veröffentlichungsnummer : **0 162 125**
**B1**

(12) **EUROPÄISCHE PATENTSCHRIFT**

(45) Veröffentlichungstag der Patentschrift :
08.07.87

(51) Int. Cl.⁴ : **B 60 P 1/64**

(21) Anmeldenummer : **84108210.0**

(22) Anmeldetag : **12.07.84**

(54) Behälter, insbesondere für Baustoff, und zugehöriges Transportfahrzeug.

(30) Priorität : **05.05.84 DE 3416643**

(43) Veröffentlichungstag der Anmeldung :
**27.11.85 Patentblatt 85/48**

(45) Bekanntmachung des Hinweises auf die Patenterteilung : **08.07.87 Patentblatt 87/28**

(84) Benannte Vertragsstaaten :
**AT BE CH DE FR GB IT LI LU NL**

(56) Entgegenhaltungen :
EP-A- 0 079 509
DE-A- 3 041 011
DE-A- 3 149 914
DE-A- 3 312 508
FR-A- 2 153 313
FR-A- 2 534 201
US-A- 2 606 676

(73) Patentinhaber : P.F.T. Putz- und Fördertechnik GmbH

D-8715 Iphofen (DE)

(72) Erfinder : Irsch, Hans-Peter, Dipl.-Ing.
Marsweg 1
D-6620 Völklingen (DE)
Erfinder : Thyroff, Siegfried
Ostmarkstrasse 24
D-8704 Uffenheim (DE)

(74) Vertreter : Bernhardt, Winfrid, Dr.-Ing.
Kobenhüttenweg 43
D-6600 Saarbrücken (DE)

## Beschreibung

Die Erfindung betrifft einen Behälter runden Querschnitts, insbesondere für Baustoff, und ein zugehöriges Transportfahrzeug, wobei der Behälter mit einem Standgestell mit Abstand über dem Boden aufstellbar ist und mit an zwei Seiten angeordneten Befestigungsmitteln an den beiden Schwenkarmen eines Mulden-Absetzkippers, des genannten Transportfahrzeugs, derart aufhängbar ist, daß der Behälter durch die Schwenkarme aus stehender Stellung heraus aufgenommen und unter Drehung dem Mulden-Absetzkipper waagerecht aufgeladen werden kann und, umgekehrt, wieder abgesetzt werden kann.

Behälter dieser Art, jedoch mit rechteckigem Querschnitt, sind aus der DE-A-21 48 048 sowie durch umfangreiche Benutzung bekannt. Sie werden vor allem als Baustellen-Silos für Gips und andere Putze und insbesondere zur Versorgung von Putzmaschinen über pneumatische Förderleitungen verwendet.

Auch Behälter runden Querschnitts in der eingangs angegebenen Art sind bekannt geworden. Die runde Bauart hat Vorteile. Sie verkleinert jedoch gegenüber der rechteckigen das Fassungsvermögen des Behälters, da die Schwenkarme des Mulden-Absetzkippers, die den Behälter zwischen sich aufnehmen, den Durchmesser des runden Querschnitts auf das Maß der Seitenlänge des rechteckigen Querschnitts beschränken.

Der Erfindung liegt die Aufgabe zugrunde, ohne großen Mehraufwand einen runden Behälter mit größerem Rauminhalt zu ermöglichen.

Gemäß der Erfindung wird dieser Zweck erfüllt durch einen Behälter und ein Transportfahrzeug der eingangs bezeichneten Art mit der Ausbildung, daß die Schwenkarme in einer für eine Mulde und in einer anderen, für einen genannten Behälter bestimmten Grundstellung relativ zu ihrem Schwenkantrieb fixierbar sind und sich in der letzteren bei aufgeladenem Behälter unterhalb dessen größter Breite erstrecken.

Diese Lösung erfordert nur einen geringfügigen Umbau eines normalen Mulden-Absetzkippers und erlaubt dann eine Vergrößerung des Behälterdurchmessers, im Prinzip bis an das Fahrzeugprofil.

Der Umbau kann einfach dergestalt vorgenommen werden, daß die Schwenkarme unmittelbar über dem Angriff der ihren Schwenkantrieb bildenden Hydraulikzylinder für eine Knickung aus der einen Grundstellung in die andere eingerichtet werden, zweckmäßig z. B. in der Weise, daß jeweils der abknickbare Teil und der übrige Teil des Schwenkarms mit Wangen aneinanderliegen und hier durch eine Achse schwenkbar miteinander verbunden und durch Bolzen-Steckverbindungen in den beiden Grundstellungen zueinander fixierbar sind.

Die Knickung unmittelbar über dem Angriff der Hydraulikzylinder läßt den Antrieb der Schwenkarme noch, wie er ist, und bringt andererseits den abgeknickten Teil schon in eine genügend tiefe, etwa waagerechte Lage unterhalb der größten seitlichen Ausdehnung des runden Behälters. Das Aneinanderliegen mit den Wangen sichert eine genügende Steifigkeit der beiden Teile in der Querrichtung, in der sie an sich nicht belastet sind. Der Wechsel aus der einen in die andere Grundstellung ist mittels der Bolzen-Steckverbindungen schnell und einfach möglich.

Der Behälter weist zweckmäßigerweise, wie bisher, Knöpfe, Haken o. dgl. auf, an denen die üblichen Ketten eines Mulden-Absetzkippers mit an den Ketten angebrachten Ösen einzuhängen sind, nur ist die Anordnung der Knöpfe, Haken o. dgl. am Behälter entsprechend der in aufgeladener Stellung des Behälters tieferen Lage der Schwenkarme eine tiefere, vorzugsweise die tiefstmögliche, und die Ösen sind gleichfalls an entsprechenden anderen Stellen der Ketten angebracht, d. h. nicht am Ende, sondern knapper.

Weiter im einzelnen sind vorzugsweise die Knöpfe, Haken o. dgl. an zwei Stützen des Standgestells angebracht, die die Auflage des Behälters in der waagerechten Stellung bilden. So hat die Befestigung der Ketten an dem liegenden Behälter die unterste Lage und, da am tragenden Gestell und nicht am Behälterblech, den günstigsten Kraftangriff.

Vorzugsweise sind an jeder der beiden Seiten zwei Knöpfe, Haken o. dgl. angebracht, an denen die üblicherweise an jedem Schwenkarm eines Mulden-Absetzkippers vorhandenen beiden Ketten unter einem stumpfen Winkel zueinander — an solcher Stelle sind die Ösen an den Ketten angebracht — einzuhängen sind.

Die Verwendung der Ketten, die der Absetzkipper für die Mulden aufweist, zugleich für den Behälter, lediglich mit gesonderten Ösen zum Anhängen desselben, erfordert praktisch keinen Mehraufwand für den Behältertransport durch den Mulden-Absetzkipper. Mit mehr oder weniger großem Aufwand sind aber auch vielerlei andere Befestigungsmöglichkeiten gegeben. Erwähnt seien hier nur Bolzen, die durch die Befestigungsaugen für die Ketten an den Enden der Schwenkarme hindurch in angepaßte Aufnahmen am Behälter gesteckt werden können oder am Behälter angebrachte Taschen, in die die Enden der Schwenkarme bei stehendem Behälter von unten eingeschoben werden.

Die Zeichnungen geben ein Ausführungsbeispiel der Erfindung wieder.

Fig. 1 zeigt in Seitenansicht einen auf einen Mulden-Absetzkipper geladenen Behälter.

Fig. 2 zeigt den Behälter auf dem Mulden-Absetzkipper in Rückansicht gemäß Fig. 1 von rechts.

Fig. 3 zeigt, wiederum in Seitenansicht, den Behälter während des Absetzvorganges.

Fig. 4 zeigt den Behälter bei fortgeschrittenem Absetzvorgang.

Fig. 5 zeigt den Behälter in abgesetzter Stellung.

Ein Mulden-Absetzkipper 1 weist eine mit schmalen seitlichen Bordwänden 2 versehene Ladefläche und zwei durch eine Achse 3 starr verbundene Schwenkarme 4 auf, die jeweils mit einem bei 5 an der Bordwand und bei 6 an dem Schwenkarm angelenkten Hydraulikzylinder 7 als Antrieb für die Schwenkung versehen sind.

Die Schwenkarme 4 sind geteilt in ein Basisteil 8, an dem der Antrieb angreift, und ein in einem Gelenk 9 mit dem Basisteil verbundenes abknickbares Teil 10, das im Bereich der Verbindung flächig an dem Basisteil anliegt und zwei Bohrungen 11 und 12 aufweist, die, je nach der gewünschten Stellung, in Flucht mit einer Bohrung 13 im Basisteil gebracht werden können und damit durch Hindurchstecken eines Bolzens 14 das abknickbare Teil 10 in der betreffenden Stellung mit dem Basisteil 8 starr zu verbinden erlauben. In dem gezeichneten Fall ist mit der Bohrung 12 diese Steckverbindung 12, 13, 14 ausgeführt.

Auf dem Mulden-Absetzkipper 1 liegt ein Baustellen-Behälter 15. Er besteht aus einem mit einem Standgestell 16 versehenen eigentlichen Behälter 17 runden Querschnitts, der an einem Auslauftrichter 18 mit einer verschließbaren Auslauföffnung 19 versehen ist.

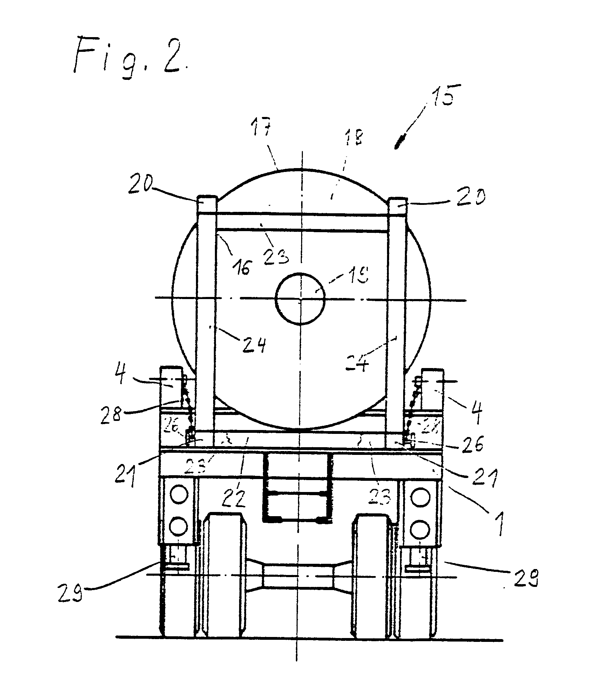

Das Standgestell 16 weist vier senkrechte Stützen 20 und 21 auf, von denen die Stützen 20 unmittelbar am Behälter 17 sitzen und die Stützen 21 über tangential am Behälter 16 angebrachte Querholme 22 (Fig. 2) mit ihm verbunden sind. Die unteren Enden der Stützen 20 und 21 sind durch vier Fußleisten 23 und 24 verbunden. In Fig. 2 ist die untere Fußleiste 23 weggebrochen, um den Querholm 22 sichtbar werden zu lassen.

An den beiden Stützen 21 befinden sich je zwei Kettenknöpfe 25 und 26, an denen jeweils die beiden Ketten 27 bzw. 28 des Mulden-Absetzkippers mit in der Zeichnung nicht erscheinenden Ösen eingehängt sind. Die Ösen sind an solchen Stellen der Kette angebracht, daß die hier wirksame Länge der Kette 28 knapp dreimal so groß ist wie diejenige der Kette 27. Die beiden Ketten schließen eingehängt einen stumpfen Winkel zwischen sich ein. Ferner ist die Anordnung der Kettenknöpfe 25 und 26 an solcher Stelle der Stützen 21 getroffen, wie es der nachfolgend beschriebenen Funktion entspricht.

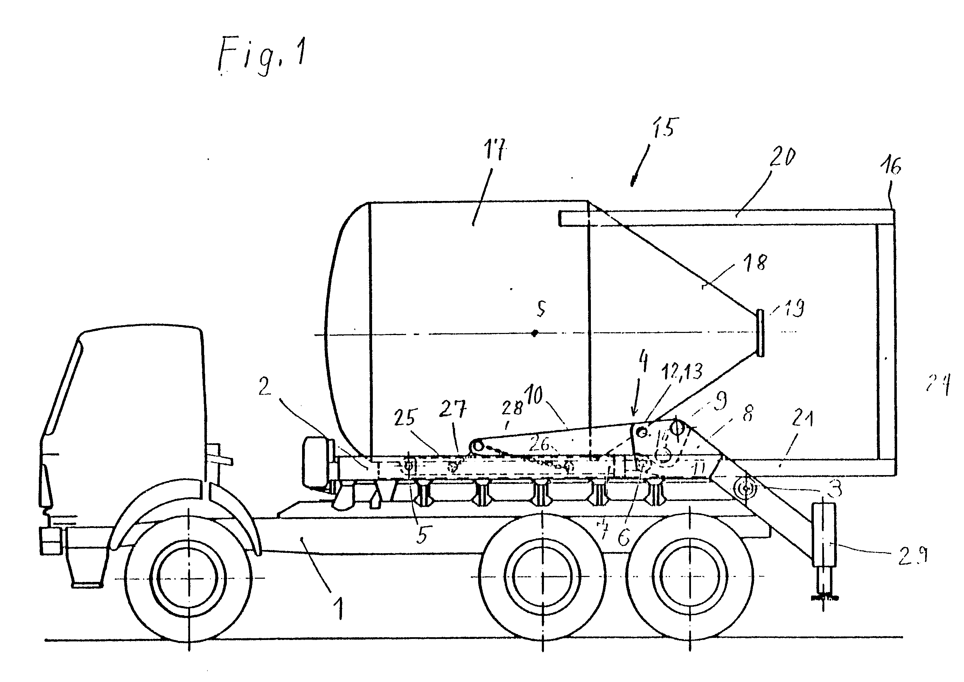

Zum Transport liegt der Baustellen-Behälter 15 mit den Stützen 21 seines Standgestells auf der Ladefläche des Mulden-Absetzkippers 1, wie in Fig. 1 dargestellt. Dabei ist er durch die Ketten 27 und 28 gesichert.

Zum Absetzen des Baustellen-Behälters 15 werden zunächst die am hinteren Ende des Mulden-Absetzkippers regelmäßig vorhandenen Stützfüße ausgefahren, und zwar so weit, daß das Fahrzeug hinten etwas angehoben wird.

Dann werden mittels der Hydraulikzylinder 2 die Schwenkarme 4 hochgeschwenkt. Sie heben den Baustellen-Behälter 15 über die Ketten 27 und 28 an, wobei er jedoch mit den Stützen 21 auf der Welle 3 abgestützt bleibt und um diese dreht.

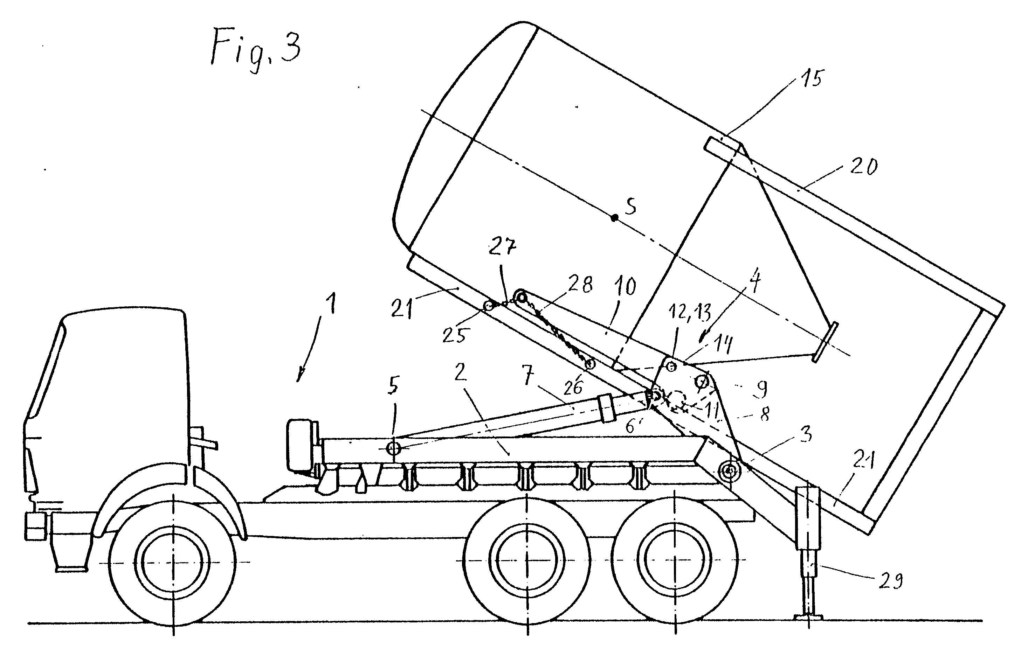

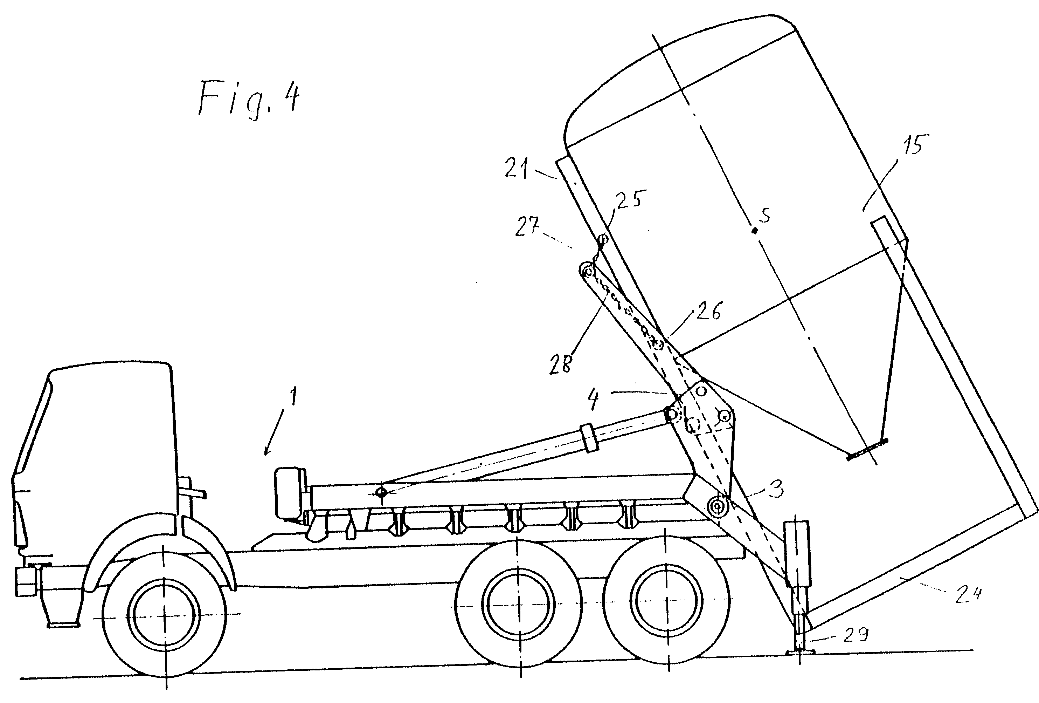

Während der Schwerpunkt S über die Welle 3 hinwegwandert, klappen die Ketten 27 und 28 nach der anderen Seite um, siehe den Unterschied, zwischen Fig. 3 und Fig. 4. Bei nicht zu schneller Bewegung der Schwenkarme 4 vollzieht sich das Umklappen ohne einen wesentlichen Ruck. Der Ablauf geht über eine kurze Phase des labilen Gleichgewichts.

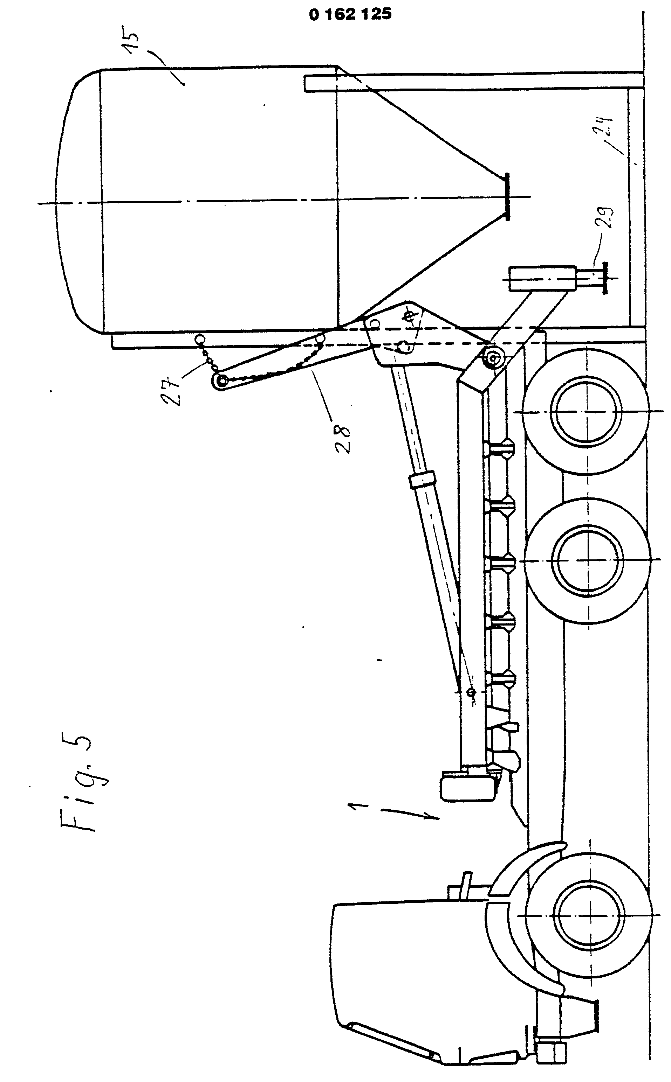

Etwa von der in Fig. 4 gezeigten Stellung ab trägt die längere Kette 28 hauptsächlich das Gewicht des Baustellen-Behälters, während die kürzere Kette 27 hauptsächlich seine Drehung bestimmt. Schließlich wird die senkrechte Stellung erreicht. In dieser befinden sich die Fußleisten 23 und 24 knapp über dem Boden. Durch Einfahren der Stützfüße 29 und damit Absenken des vorher durch das Ausfahren hinten etwas angehobenen Fahrzeugs wird der Baustellen-Behälter schließlich auf dem Boden aufgestellt. Diesen Zustand zeigt Fig. 5. Die Kette ist locker, die Kette 27 ist infolge des Absenkens des Fahrzeugs gegenüber dem stehenden Baustellen-Behälter noch etwas gespannt. Sie kann durch geringfügiges Weiterschwenken der Schwenkarme 4 gelockert und dann ebenso wie die Kette 28 ausgehängt werden. Dann steht der Baustellen-Behälter völlig frei.

Das Aufladen des Baustellen-Behälters auf den Mulden-Absetzkipper vollzieht sich entsprechend umgekehrt.

## Patentansprüche

1. Behälter (15) runden Querschnitts, insbesondere für Baustoff, und zugehöriges Transportfahrzeug (1), wobei der Behälter (15) mit einem Standgestell (16) mit Abstand über dem Boden aufstellbar ist und mit an zwei Seiten angeordneten Befestigungsmitteln (25 ; 26) an den beiden Schwenkarmen (4) eines Mulden-Absetzkippers (1), des genannten Transportfahrzeugs (1), derart aufhängbar ist, daß der Behälter (15) durch die Schwenkarme (4) aus stehender Stellung heraus aufgenommen und unter Drehung dem Mulden-Absetzkipper (1) waagerecht aufgeladen werden kann und, umgekehrt, wieder abgesetzt werden kann, dadurch gekennzeichnet, daß die Schwenkarme (4) in einer für eine Mulde und in einer anderen, für einen genannten Behälter bestimmten Grundstellung relativ zu ihrem Schwenkantrieb fixierbar (11, 13, 14 bzw. 12, 13, 14) sind und sich in der letzteren bei aufgeladenem Behälter (15) unterhalb dessen größter Breite erstrecken.

2. Behälter und Transportfahrzeug nach Anspruch 1, bei dem die Schwenkarme (4) mit, insbesondere hydraulischen, Antrieben (7) versehen sind, die in Abstand vom Drehpunkt (3) an ihnen angreifen, dadurch gekennzeichnet, daß die Schwenkarme (4), vorzugsweise knapp jenseits dieses Abstands, aus der einen Grundstellung in die andere verknickbar (9) sind.

3. Behälter und Transportfahrzeug nach Anspruch 2, dadurch gekennzeichnet, daß jeweils der abknickbare Teil (10) und der übrige Teil (8) des Schwenkarms (4) mit Wangen aneinanderliegen und hier durch eine Achse (9) schwenkbar miteinander verbunden und durch Bolzen-Steckverbindungen (11, 13, 14 bzw. 12, 13, 14) in den beiden Grundstellungen zueinander fixierbar sind.

4. Behälter und Transportfahrzeug nach einem der Ansprüche 1-3, dadurch gekennzeichnet, daß der Behälter (15) als Befestigungsmittel Knöpfe (25 ; 26) oder Haken aufweist, an denen übliche Ketten (27 ; 28) eines Mulden-Absetzkippers (1), vorzugsweise mit an entsprechender Stelle der Ketten (27 ; 28) angebrachten Ösen, einzuhängen sind.

5. Behälter und Transportfahrzeug nach Anspruch 4, dadurch gekennzeichnet, daß zwei Stützen (21) des Standgestells (16) die Auflage des Behälters (15) in der waagerechten Stellung bilden und die Knöpfe (25 ; 26) oder Haken an diesen angebracht sind.

6. Behälter und Transportfahrzeug nach Anspruch 4 oder 5, dadurch gekennzeichnet, daß an jeder der beiden Seiten zwei Knöpfe (25 ; 26) oder Haken angebracht sind, an denen die üblicherweise an jedem Schwenkarm (4) eines Mulden-Absetzkippers (1) vorhandenen beiden Ketten (27 ; 28) unter einem stumpfen Winkel zueinander einzuhängen sind.

## Claims

1. Receptable (15) having a round cross section, especially for building material, and an associated haulage vehicle (1), it being possible to erect the receptacle (15) with a frame (16) at a certain distance above the ground and it being possible to suspend the receptacle (15) with fasteners (25 ; 26) disposed on two sides on the two swivel arms (4) of a tipping wagon (1), of the said haulage vehicle (1), so that the receptacle (15) can be removed from the standing position by the swivel arms (4) and can be loaded horizontally onto the tipping wagon (1) by rotation and, vice versa, can be set down again, characterised in that the swivel arms (4) can be fixed (11, 13, 14 or 12, 13, 14 respectively) in one basic position intended for a skip and in another basic position intended for a named container, relative to its pivot drive, and in the latter position when the container (15) is laden the swivel arms extend under its greatest width.

2. Receptacle and haulage vehicle according to Claim 1, in which the swivel arms (4) are provided with drives (7), in particular hydraulic drives, which act on said arms at a distance from the point of rotation (3), characterised in that the swivel arms (4) can be bent (9) out of one basic position into the other, preferably just the other side of this distance.

3. Receptacle and haulage vehicle according to Claim 2, characterised in that the bendable part (10) and the remaining part (8) of the swivel arm (4) are juxtaposed with side plates and here are tiltably connected to one another by an axle (9) and can be fixed to one another in the two basic positions by bolt-insert connections (11, 13, 14 or 12, 13, 14 respectively).

4. Receptacle and haulage vehicle according to one of Claims 1 to 3, characterised in that receptacle (15) has as fasteners studs (25 ; 26) or hooks, on which conventional chains (27 ; 28) of a tipping wagon (1) are to be hung, preferably with lugs attached to an appropriate place on the chains (27 ; 28).

5. Receptacle and haulage vehicle according to Claim 4, characterised in that two legs (21) of frame (16) form the support for receptacle (15) in the horizontal position and the studs (25 ; 26) or hooks are attached to these.

6. Receptacle and haulage vehicle according to Claim 4 or 5, characterised in that to each of the two sides are attached two studs (25 ; 26) or hooks, on which the two chains (27 ; 28) normally present on each swivel arm (4) of the tipping wagon (1) are to be hung at an obtuse angle to one another.

## Revendications

1. Récipient (15) de section transversale ronde, notamment pour matériau de construction, et véhicule de transport correspondant (1), le récipient (15), qui comporte un bâti d'appui (16), pouvant être placé à une certaine distance au-dessus du sol et pouvant être suspendu, par des moyens de fixation (25, 26) situés sur deux côtés, aux deux bras pivotants (4) d'un basculeur à auge (1) du véhicule de transport (1), de telle manière que le récipient (15) soit enlevé, par les bras pivotants (4), de la position d'appui verticale et, par rotation du basculeur à auge (1), puisse être chargé horizontalement et, inversement, puisse être déposé de nouveau, caractérisé en ce que les bras pivotants (4) peuvent être fixés (11, 13, 14 ou 12, 13, 14), par rapport à leur dispositif de commande du pivotement, dans une position fondamentale pour une auge et dans une autre position fondamentale pour le récipient indiqué et, dans cette dernière position, le récipient (15) étant chargé, s'étendent au-dessous de sa plus grande largeur.

2. Récipient et véhicule de transport selon la revendication 1, dans lequel les bras pivotants (4) sont munis de dispositifs de commande (7), notamment hydrauliques, qui agissent sur eux à une certaine distance du centre de rotation (3), caractérisés en ce que les bras pivotants (4) peuvent, de préférence juste au-delà de cette distance, être pliés en passant de l'une des positions fondamentales dans l'autre.

3. Récipient et véhicule de transport selon la revendication 2, caractérisés en ce que la partie qui peut être pliée (10) et l'autre partie (8) du bras pivotant (4) s'appliquent l'une contre l'autre par des plaques et y sont reliées par un axe (9) de manière à pouvoir pivoter l'une par rapport à l'autre et peuvent être fixées l'une par rapport à l'autre par des liaisons à enfoncement de boulons (11, 13, 14 ou 12, 13, 14) dans les deux positions fondamentales.

4. Récipient et véhicule de transport selon l'une des revendications 1 à 3, caractérisés en ce que le récipient (15) comporte, comme moyens de fixation, des boutons (25, 26) ou des crochets auxquels les chaînes habituelles (27, 28) d'un basculeur à auge (1) doivent être accrochées, de préférence au moyen d'œillets placés à des endroits convenables des chaînes (27, 28).

5. Récipient et véhicule de transport selon la revendication 4, caractérisés en ce que deux montants (21) du cadre d'appui (16) constituent la base d'appui du récipient (15) dans la position horizontale et que les boutons (25, 26) ou les crochets sont fixés sur eux.

6. Récipient et véhicule de transport selon l'une des revendications 4 ou 5, caractérisés en ce que chacun des deux côtés porte deux boutons (25, 26) ou crochets auxquels doivent être accrochées, en formant un angle obtus l'une avec l'autre, les deux chaînes (27, 28) qui se trouvent généralement sur chacun des bras pivotants (4) d'un basculeur à auge (1).

Fig. 1

Fig. 2.

Fig. 3

0 162 125

Fig. 4

Fig. 5

0 162 125